# EUROPEAN PATENT APPLICATION

(11) **EP 4 667 321 A2**
(43) Date of publication of application: **24.12.2025**
(21) Application number: 25213637.9
(22) Date of filing: 07.07.2022
(51) Int. Cl.: B62B 7/14

(54) **SEAT-BED DUAL-PURPOSE SUPPORT SWITCHING MECHANISM FOR BEARING DEVICE, SEAT, AND BEARING DEVICE**

(30) Priority: 07.07.2021 CN 202110770235
(62) Divisional of application: 22741259.0
(71) Applicant: Wonderland Switzerland AG, 6312 Steinhausen (CH)
(72) Inventor: YI, Xiaolong, 6312 Steinhausen (CH)
(74) Representative: Pfenning, Meinig & Partner mbB

(57) **Abstract**

The present disclosure provides a seat-bed dual-purpose support switching mechanism for a bearing device, a seat, and a bearing device, including: a bearing support with rotary holders rotatably arranged on fixing holders on opposite sides of the bearing device, so that the bearing support can pivotably swing between a seat position and a carrycot position, and a switching assembly for the rotary holder to drive a locking member to be away from the fixing holder via a driving lever so that the bearing support is unlocked to pivotably swing, or to drive the locking member to be close to the fixing holder with the driving lever so that the bearing support is locked after a pivotal swing. In this way, during the switching of the bearing support between a seat mode and a carrycot mode, through a simple structure in which the driving lever is connected to the locking member, the locking member may be driven to control unlocking or locking of the pivotal swing of the bearing support, so as to achieve a simple structure and labor-saving operations.

## Description

### TECHNICAL FIELD

The present disclosure relates to a seat-bed dual-purpose support switching mechanism for a bearing device, and in particular, to a seat-bed dual-purpose support switching mechanism in which a bearing support may switch between a seat mode and a carrycot mode, a seat, and a bearing device.

### BACKGROUND

It is known that a stroller for infants mainly has a frame and a carrier arranged on the frame. An adult can place an infant in the carrier and push the frame to move around conveniently. The carrier may be a carrycot for the infant to lie down, or a seat for the infant to sit.

To enable the infants and children to feel more comfortable in the strollers, many strollers have seats designed with backrests fully laid down so that the infants may lie flat in the seats. However, existing structures for making the backrest lie flat are more complicated to realize and rather inconvenient to operate. In addition, in the process of laying the backrest of the existing seats down, the strollers are easily overturned to damage the safety of the infant therein due to a change in the center of gravity.

### SUMMARY

In view of the above existing technologies, a seat-bed dual-purpose support switching mechanism for a bearing device, a seat, and a bearing device are developed, so that the bearing device is provided with a switching mechanism for switching between a seat mode and a carrycot mode, which may achieve the effects of a simple structure and labor-saving operations.

In order to achieve the above objectives, the present disclosure provides a seat-bed dual-purpose support switching mechanism for a bearing device, the bearing device includes a main frame body, wherein the support switching mechanism includes two fixing holders, a bearing support, and a switching assembly, and the switching assembly includes a locking member and a driving lever.

The two fixing holders are respectively fixed to opposite sides of the main frame body, at least one of the fixing holders has a seat mode positioning portion and a carrycot mode positioning portion being separated by an angle on the fixing holder.

The bearing support is provided, on opposite sides, with rotary holders corresponding to each of the fixing holders, each of the rotary holders is rotatably arranged on its corresponding fixing holder, and the bearing support is configured to pivotably swing between a seat position and a carrycot position as the rotary holders rotate.

The locking member is connected to the driving lever to be disposed on at least one of the rotary holder, wherein, when the driving lever is pulled by an external force, the locking member is driven to move away from its corresponding fixing holder, so that the bearing support is unlocked and allowed to pivotably swing between the seat position and the carrycot position; and after the external force disappears, the locking member is driven to move towards its corresponding fixing holder to engage with one of the seat mode positioning portion and the carrycot mode positioning portion, so that the bearing support is locked.

In a preferred embodiment, the locking member includes an actuation portion and an engagement portion extending laterally from one end of the actuation portion, each of the seat mode positioning portion and the carrycot mode positioning portion is a positioning groove, and the locking member is engaged and locked when the engagement portion is inserted into one of the seat mode positioning portion and the carrycot mode positioning portion.

In a preferred embodiment, the driving lever has a force applying end and a force resisting end away from each other, as well as a shaft coupling portion between the force applying end and the force resisting end and being shaft-coupled with the rotary holder on which the driving lever is disposed, the switching assembly includes a traction member connected to the force applying end, and the force resisting end is pivotably swingingly connected to the actuation portion, so that the traction member makes the driving lever swing around an axis of the shaft coupling portion, while the force resisting end tows the actuation portion to make the locking member move.

In a preferred embodiment, the switching assembly includes a reset member extending along a moving direction of the locking member to have one end abutting against one end of the actuation portion away from the engagement portion and the other end abutting against the rotary holder, the actuation portion applies a pressure to the reset member to generate a reset elastic force when the driving lever drives the locking member to move until the bearing support is unlocked, and the locking member is reset by the reset elastic force to an extent that the bearing support is locked when the driving lever stops driving,.

In a preferred embodiment, the reset member is a compression spring, and one end of the actuation portion away from the engagement portion is provided with a boss for the reset member to sleeve on.

In a preferred embodiment, the actuation portion is provided with a rod portion extending from a same side with the engagement portion, and the driving lever is provided, at the force resisting end, with a receiving hole being inserted through by the rod portion, so as to pivotably swingingly connect to the actuation portion.

In a preferred embodiment, the shaft coupling portion is a shaft hole, the rotary holder, on which the driving lever is disposed, has a pivoting shaft, the pivoting shaft arranged correspondingly to the shaft coupling portion, and the driving lever is shaft-coupled with the rotary holder through the shaft coupling portion being inserted through by the pivoting shaft.

In a preferred embodiment, the switching assembly includes an operable operating member arranged on the bearing support, and the traction member is a cable having one end connected to the force applying end and the other end connected to the operating member, to pull the operating member to drive the force applying end through the traction member, and to interlink the actuation portion through the force resisting end to make the locking membermove.

In a preferred embodiment, the operating member includes a pull portion and two sliders, the pull portion being pivotably arranged on the bearing support and having two guide rail portions disposed to be tilted; the two sliders being are disposed in the bearing support, and each of the sliders has a guide channel to engage with a corresponding guide rail portion, and a joint to connect with one end of the traction member, wherein the two sliders get closer to each other through being guided by the two guide rail portions as the pull portion is pulled, so as to interlink with the traction member to drive the force applying end.

In a preferred embodiment, the locking member further includes an extension portion and a blocking portion, the extension portion extends at one end of the engagement portion away from the actuation portion, and the extension portion and the actuation portion extends in opposite directions, the blocking portion is formed at one end of the extension portion away from the engagement portion and in a shape of a hook; the rotary holder is provided with an opening on a side wall, and has an elastic arm extending from the side wall in the opening, and the elastic arm has, at a tail end thereof, a convex portion laterally protruding from the side wall; and when the locking member is engaged and locked with one of the seat mode positioning portion and the carrycot mode positioning portion, the opening is aligned with the position of the extension portion, and the convex portion is pressed, so that the elastic arm leans from the opening towards the extension portion and blocks the blocking portion to restrict the locking member from detaching from the bearing support.

In a preferred embodiment, each of the fixing holders has a first side surface, each of the rotary holders has a second side surface, and the first side surface is opposite to the second side surface when each of the rotary holders is pivotably disposed on its corresponding fixing holder, wherein, in the first side surface and the second side surface, one has a convex limiting portion, and the other has a concave groove portion corresponding to the limiting portion, the groove portion is arc-shaped and has a predetermined arc length, wherein the limiting portion takes the predetermined arc length as a movable stroke in the groove portion, to limit a rotatable angle of the rotary holder.

In a preferred embodiment, the angle is in a range of 30 degrees to 45 degrees.

In a preferred embodiment, the bearing support is provided with a canopy frame.

In a preferred embodiment, the bearing support is connected to an accessory when the rotary holders on the opposite sides are at the seat position.

In a preferred embodiment, the accessory is a plate or a handrail.

In another embodiment of the present disclosure, a seat is provided, including a bearing support, two fixing holders, and a switching assembly, wherein at least one of the fixing holders has a seat mode positioning portion and a carrycot mode positioning portion being separated by an angle on the fixing holder; the bearing support is provided, on opposite sides, with rotary holders corresponding to each of the fixing holders, the rotary holders being rotatably arranged on the corresponding fixing holders, and the bearing support are configured to pivotably swing between a seat position and a carrycot position as the rotary holders rotate; and the switching assembly includes a locking member connected to a driving lever to be disposed on at least one of the rotary holders, wherein, when the driving lever is pulled by an external force, the locking member is driven to move away from its corresponding fixing holder, so that the bearing support is unlocked and allowed to pivotably swing between the seat position and the carrycot position, and after the external force disappears, the locking member is driven to move towards its corresponding fixing holder to engage with one of the seat mode positioning portion and the carrycot mode positioning portion, so that the bearing support is locked.

In another embodiment of the present disclosure, a bearing device is provided with the seat described above.

In this way, with the seat-bed dual-purpose support switching mechanism for a bearing device, the seat, and the bearing device according to the present disclosure, through a simple structure in which the locking member is connected to the driving lever, the driving lever drives the locking member to move to complete switching and locking of the bearing support during the switching between the seat mode and the carrycot mode, so as to achieve a simple structure for switching and locking of the bearing support between the seat mode and the carrycot mode and labor-saving operations.

### BRIEF DESCRIPTION OF THE DRAWINGS

In order to more clearly illustrate the technical solutions in embodiments of the present disclosure or the prior art, the accompanying drawings used in the description of the embodiments will be briefly introduced below. It is apparent that, the accompanying drawings in the following description are only some embodiments of the present disclosure, and other drawings can be obtained by those of ordinary skilled in the art from the provided drawings without exerting any creative efforts.
FIG. 1 is a schematic view showing that a bearing device is in a seat mode according to an embodiment of the present disclosure;
FIG. 2 is a schematic view showing that the bearing device is in a carrycot mode according to an embodiment of the present disclosure;
FIG. 3 is a perspective view of an assembly of a fixing holder and a rotary holder of a bearing support according to an embodiment of the present disclosure;
FIG. 4 is a perspective view of a connection between a locking member and a driving lever according to an embodiment of the present disclosure;
FIG. 5 is a three-dimensional view of an operating member being disposed on the bearing support according to an embodiment of the present disclosure;
FIG. 6 is a schematic view of arrangement of the operating member including a pull portion and sliders in the bearing support according to an embodiment of the present disclosure;
FIG. 7 is a perspective view of the rotary holder provided with an opening on a side wall and having an elastic arm according to an embodiment of the present disclosure;
FIG. 8 is a schematic sectional view showing that the elastic arm blocks a blocking portion when the locking member is at a lock position according to an embodiment of the present disclosure;
FIG. 9 is a schematic view of the fixing holder having a limiting portion in a groove portion of the rotary holder to limit a rotation angle of the rotary holder according to an embodiment of the present disclosure;
FIG. 10 is a schematic view of engagement and locking of the locking member with a seat mode positioning portion at the lock position when in the seat mode according to an embodiment of the present disclosure;
FIG. 11 is a schematic view showing that the driving lever in FIG. 10 is brought by a traction member to drive the locking member to move to an unlock position;
FIG. 12 is a schematic view showing that the rotary holder in FIG. 11 rotates from the seat position to the carrycot position; and
FIG. 13 is a schematic view showing that the locking member in FIG. 12 is reset by a reset member to the lock position to be engaged and locked with a carrycot mode positioning portion.

Reference numerals:
100. support switching mechanism; 10. fixing holder; 11. seat mode positioning portion; 12. carrycot mode positioning portion; 13. first side surface; 14. limiting portion; 20. bearing support; 21. rotary holder; 211. pivoting shaft; 212. side wall; 213. opening; 214. elastic arm; 215. convex portion; 216. second side surface; 217. groove portion; 22. canopy frame; 23. accessory; 30. switching assembly; 40. locking member; 41. actuation portion; 411. boss; 412. rod portion; 42. engagement portion; 43. extension portion; 44. blocking portion; 50. driving lever; 51. force applying end; 52. force resisting end; 521. receiving hole; 53. shaft coupling portion; 60. operating member; 61. pull portion; 611. guide rail portion; 62. slider; 621. guide channel; 70. traction member; 80. reset member; 200. main frame body; 201. handrail; P1. seat position; P2. carrycot position; P3. lock position; P4. unlock position; A. side wall surface.

### DETAILED DESCRIPTION OF THE EMBODIMENTS

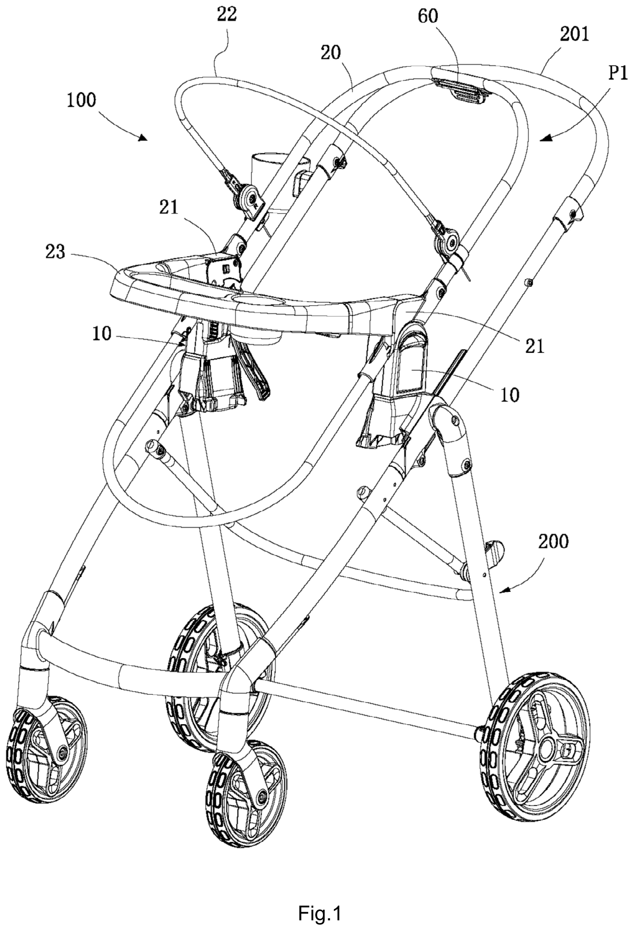

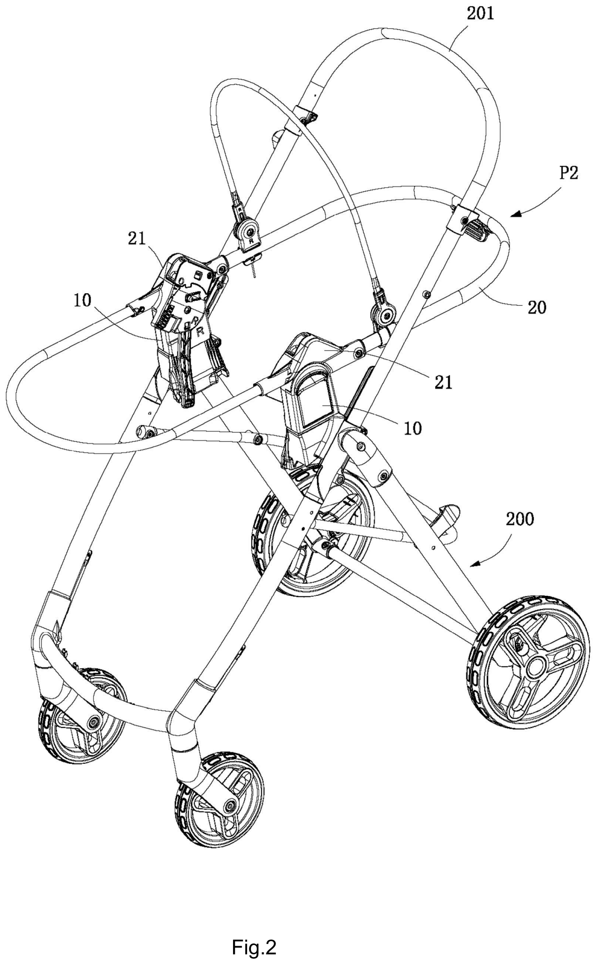

Referring to FIG. 1 to FIG. 13, the present disclosure provides a seat-bed dual-purpose support switching mechanism 100 for a bearing device. The bearing device herein is, for example, a baby stroller for carrying babies and walking by pushing, including a main frame body 200. The support switching mechanism 100 is disposed on the main frame body 200. The support switching mechanism 100 may be in a form of a seat to be mounted to the main frame body 200 of the bearing device in this embodiment, so as to provide switching between a seat mode (as shown in FIG. 1) and a carrycot mode (as shown in FIG. 2), which allows a baby to sit in a sitting position in the seat mode and to lie flat in a lying position in the carrycot mode.

The support switching mechanism 100 includes two fixing holders 10, a bearing support 20, and a switching assembly 30.

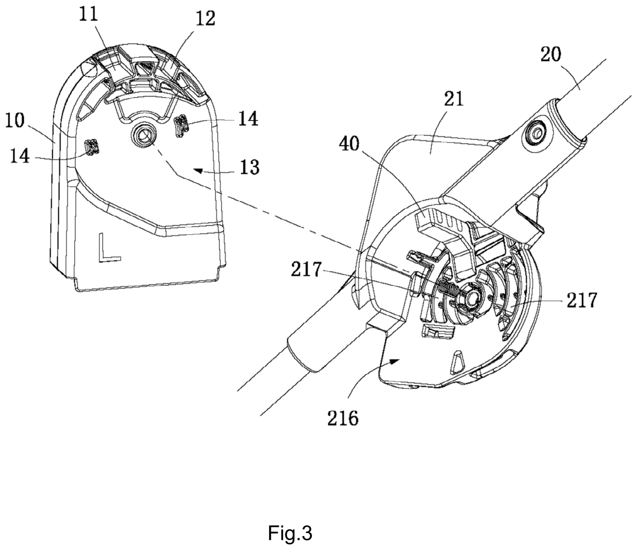

As shown in FIG. 1 and FIG. 2, the two fixing holders 10 are respectively fixed to opposite sides of the main frame body 200. In this embodiment, each one of the two fixing holders 10 has a seat mode positioning portion 11 and a carrycot mode positioning portion 12, and the seat mode positioning portion 11 and the carrycot mode positioning portion 12 are separated by an angle on the fixing holder 10 (as shown in FIG. 3).

As shown in FIG. 1 and FIG. 2, the bearing support 20 is provided, on opposite sides, with rotary holders 21 corresponding to the fixing holders 10, the rotary holders 21 are rotatably arranged on their corresponding fixing holders 10, and the bearing support 20 is configured to pivotably swinging between a seat position P1 (as shown in FIG. 1) and a carrycot position P2 (as shown in FIG. 2) as the rotary holders 21 rotate. The bearing support 20 may be provided with a seat cover (not shown in the figures). The seat cover allows a baby to sit in a sitting position as the bearing support 20 is at the seat position P1, and to lie flat in a lying position as the bearing support 20 is at the carrycot position P2. Therefore, when the bearing support 20 pivotably swings to the seat position P1 and is locked, it is the seat mode. In addition, when the bearing support 20 pivotably swings to the carrycot position P2 and is locked, it is the carrycot mode. As shown in FIG. 1 and FIG. 2, the bearing support 20 in this embodiment is provided with a canopy frame 22, and the bearing support 20 may be provided with an accessory 23 on the rotary holders 21 on the opposite sides, such as a dinner plate or a handrail, especially when the bearing support 20 is at the seat position P1.

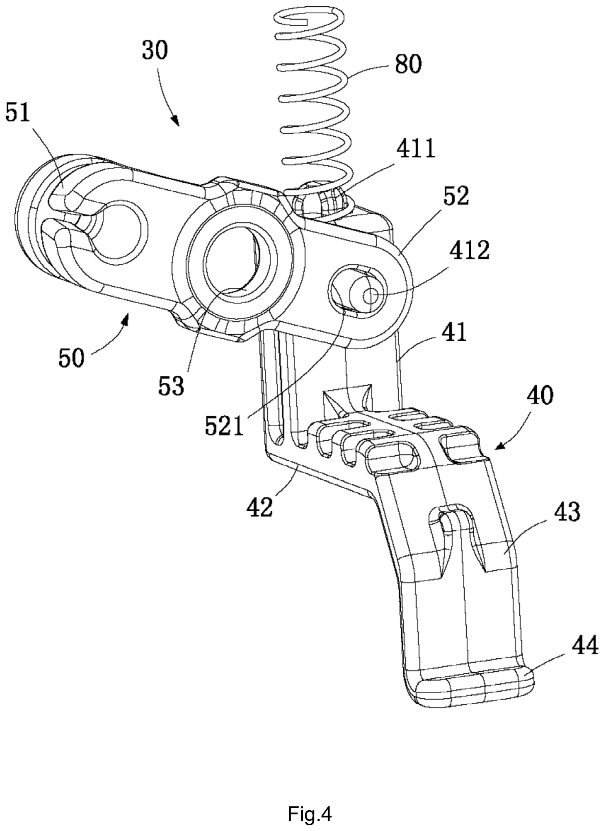

The switching assembly 30 is provided with a locking member 40 connected to a driving lever 50 on each rotary holder 21 respectively in this embodiment (as shown in FIG. 4). When the driving lever 50 is pulled by an external force, the driving lever 50 drives the locking member 40 to move away from its corresponding fixing holder 10, so that the bearing support 20 is unlocked, and the bearing support 20 is then allowed to pivotably swing between the seat position P1 and the carrycot position P2. After the external force disappears, the locking member 40 is driven to move towards its corresponding fixing holder 10 to engage with one of the seat mode positioning portion 11 and the carrycot mode positioning portion 12, so that the bearing support 20 is locked. In this case, the bearing support 20 cannot pivotably swing between the seat position P1 and the carrycot position P2.

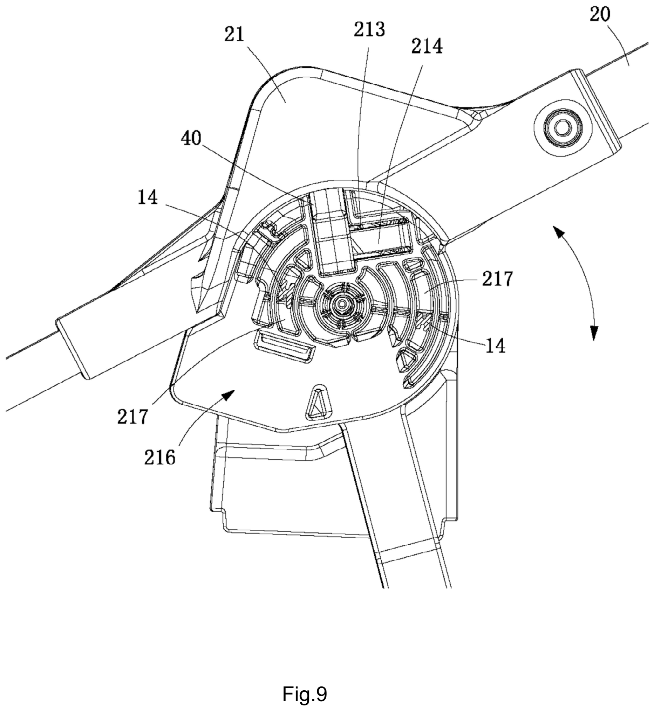

Specifically, referring to FIG. 9 to FIG. 12, the locking member 40 can move linearly between a lock position P3 and an unlock position P4 through the driving of the driving lever 50. When the bearing support 20 pivotably swings to the seat position P1, the locking member 40 can be aligned with the seat mode positioning portion 11, and the driving lever 50 drives the locking member 40 to move to the lock position P3 to be engaged and locked with the seat mode positioning portion 11. Alternatively, when the bearing support 20 pivotably swings to the carrycot position P2, the locking member 40 can be aligned with the carrycot mode positioning portion 12, and the driving lever 50 drives the locking member 40 to move to the lock position P3 to be engaged and locked with the carrycot mode positioning portion 12. In addition, when the driving lever 50 drives the locking member 40 to move to the unlock position P4, the locking member 40 is disengaged from one of the seat mode positioning portion 11 and the carrycot mode positioning portion 12, so that the bearing support 20 can pivotably swing between the seat position P1 and the carrycot position P2 freely.

In the embodiments described above, the two fixing holders 10 both have a seat mode positioning portion 11 and a carrycot mode positioning portion 12, and the rotary holders 21 are each provided with a locking member 40 and a driving lever 50, so that the locking member 40 can engage with and lock one of the seat mode positioning portion 11 and the carrycot mode positioning portion 12 between the two fixing holders 10 and the corresponding two rotary holders 21, but the present disclosures is not limited thereto. For example, only the fixing holder 10 has the seat mode positioning portion 11 and the carrycot mode positioning portion 12, and the rotary holder 21 is provided with the locking member 40 and the driving lever 50 corresponding to the fixing holder 10, which can also achieve the effect that the locking member 40 engages with and locks one of the seat mode positioning portion 11 and the carrycot mode positioning portion 12.

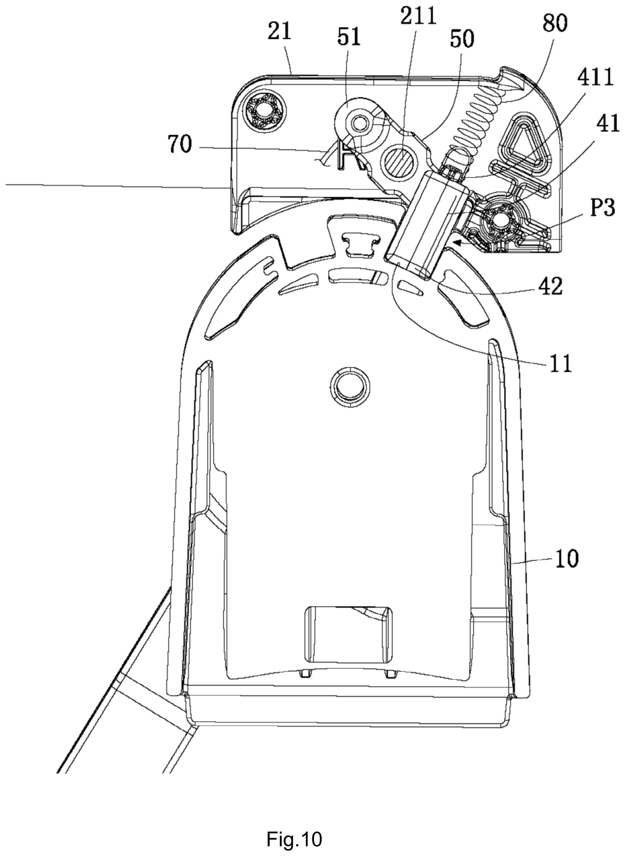

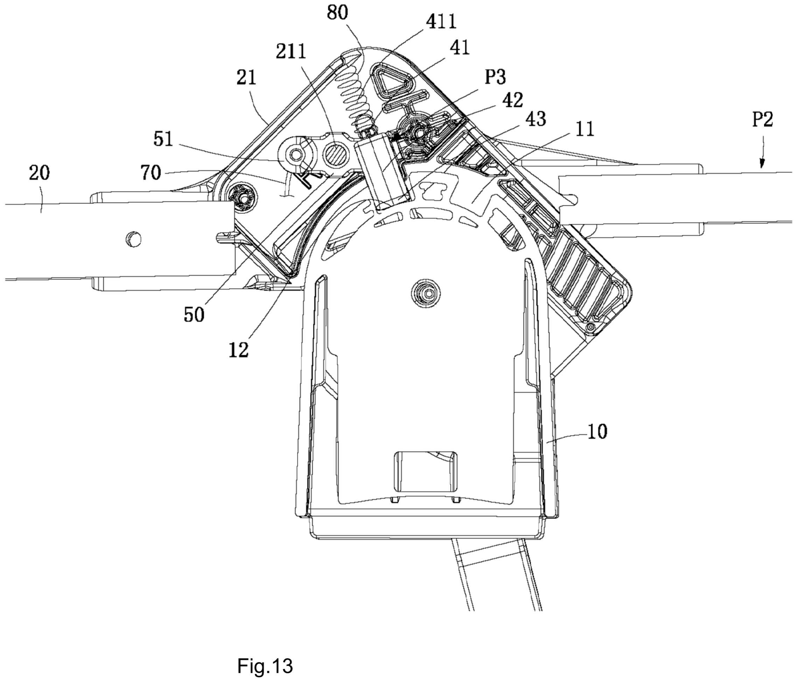

In one preferred embodiment, as shown in FIG. 3, the fixing holder 10 is integrally formed, and each of the seat mode positioning portion 11 and the carrycot mode positioning portion 12 is a positioning groove formed by recessing from the fixing holder 10. As shown in FIG. 4, the locking member 40 in this embodiment includes an actuation portion 41 and an engagement portion 42, and the engagement portion 42 extends laterally from one end of the actuation portion 41. When the locking member 40 is aligned with the seat mode positioning portion 11 and moves to the lock position P3, the engagement portion 42 is inserted into the seat mode positioning portion 11 for engagement and locking (as shown in FIG. 10). In this case, the bearing support 20 is positioned at the seat position P1 and is in the seat mode. In addition, when the locking member 40 is aligned with the carrycot mode positioning portion 12 and also moves to the lock position P3, the engagement portion 42 is inserted into the carrycot mode positioning portion 12 for engagement and locking (as shown in FIG. 13). In this case, the bearing support 20 is positioned at the carrycot position P2 and is in the carrycot mode.

As shown in FIG. 4, the driving lever 50 has a force applying end 51 and a force resisting end 52 away from each other, and a shaft coupling portion 53 between the force applying end 51 and the force resisting end 52, which is shaft-coupled with the rotary holder 21 on which the driving lever 50 is disposed. Preferably, the shaft coupling portion 53 in this embodiment is a shaft hole, the rotary holder 21 disposed with the driving lever 50 has a pivoting shaft 211 (as shown in FIG. 10 to FIG. 13) arranged corresponding to the shaft coupling portion 53, and the driving lever 50 is inserted by the pivoting shaft 211 at the shaft coupling portion 53 to enable the driver lever 50 to be shaft-coupled with the rotary holder 21 on which the driving lever 50 is disposed.

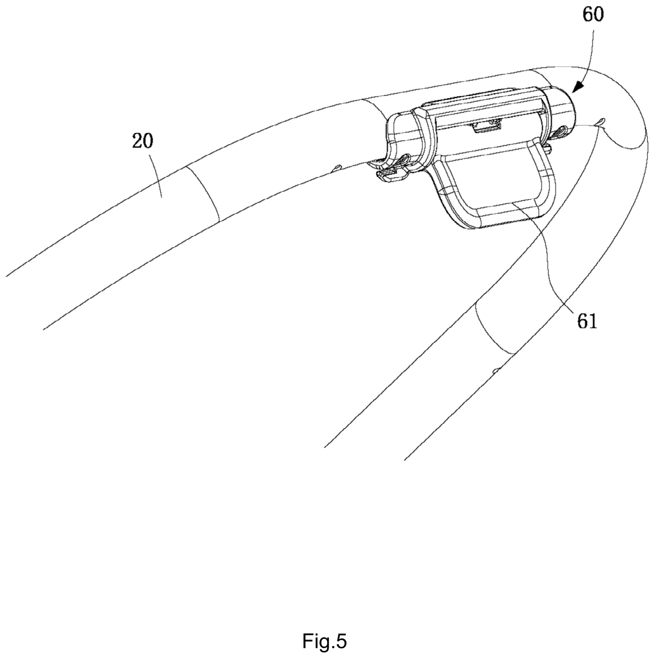

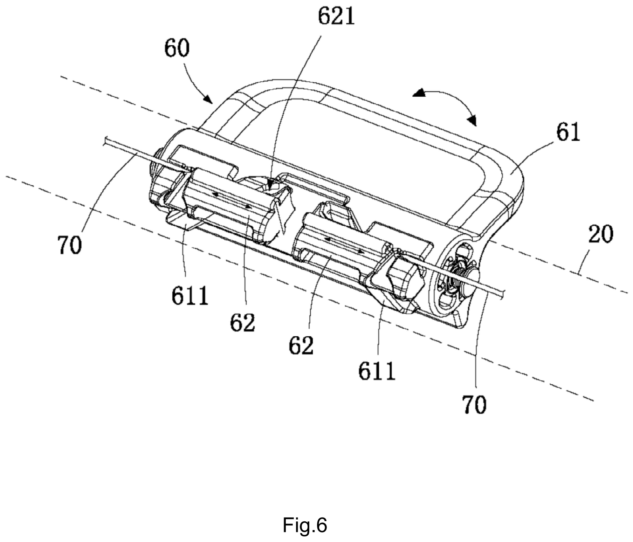

As shown in FIG. 5 and FIG. 6, the switching assembly 30 includes an operable operating member 60 and a traction member 70. The operating member 60 is arranged on the bearing support 20, and is roughly located at a handrail 201 of the main frame body 200 in this embodiment. The traction member 70 is a cable in this embodiment, and has one end connected to the force applying end 51 and the other end connected to the operating member 60. The force resisting end 52 is pivotably swingingly connected to the actuation portion 41, and the operating member 60 is pulled to drive the force applying end 51 through the traction member 70 so as to make the driving lever 50 swing around an axis of the shaft coupling portion 53, while the locking member 40 is driven to move between the lock position P3 and the unlock position P4 through the force resisting end 52 interlinking with the actuation portion 41.

As shown in FIG. 6, the operating member 60 further includes a pull portion 61 and two sliders 62 in this embodiment. The pull portion 61 is pivotably arranged on the bearing support 20 and can be pulled, and the pull portion 61 has two guide rail portions 611. The two guide rail portions 611 are disposed to be tilted. The two sliders 62 are arranged in the bearing support 20 and each have a guide channel 621 engaging with the guiding portion 611, and each slider 62 has a joint (not shown in the figure) to connect with one end of the traction member 70. When the pull portion 61 is pulled, the two sliders 62 get close to each other through being guided by the two guide rail portions 611, and interlink the traction member 70 to drive the force applying end 51 connected to the other end of the traction member 70.

As shown in FIG. 4, the switching assembly 30 further includes a reset member 80. The reset member 80extends along a moving direction of the locking member 40, and the reset member 80 has one end abutting against one end of the actuation portion 41 away from the engagement portion 42 and the other end abutting against an inner side wall of the rotary holder 21 (as shown in FIG. 10 to FIG. 13). When the driving lever 50 drives the locking member 40 to move to the unlock position P4, the actuation portion 41 applies a pressure to the reset member 80 to generate a reset elastic force, and when the driving lever 50 stops driving, the locking member 40 may be reset to the lock position P3 by the reset elastic force.

The reset member 80 mentioned above is a compression spring, and one end of the actuation portion 41 away from the engagement portion 42 is provided with a boss 411. The boss 411 is provided for the reset member 80 to sleeve on, so that the reset member 80 cannot easily slip to escape from the actuation portion 41 against which it abuts. In addition, the actuation portion 41 is provided with a rod portion 412, the rod portion 412 extends from a same side with the engagement portion 42, and the driving lever 50 is provided with a receiving hole 521 at the force resisting end 52. The driving lever 50 may be pivotably swingingly connected to the actuation portion 41 via the receiving hole 521 being inserted by the rod portion 412.

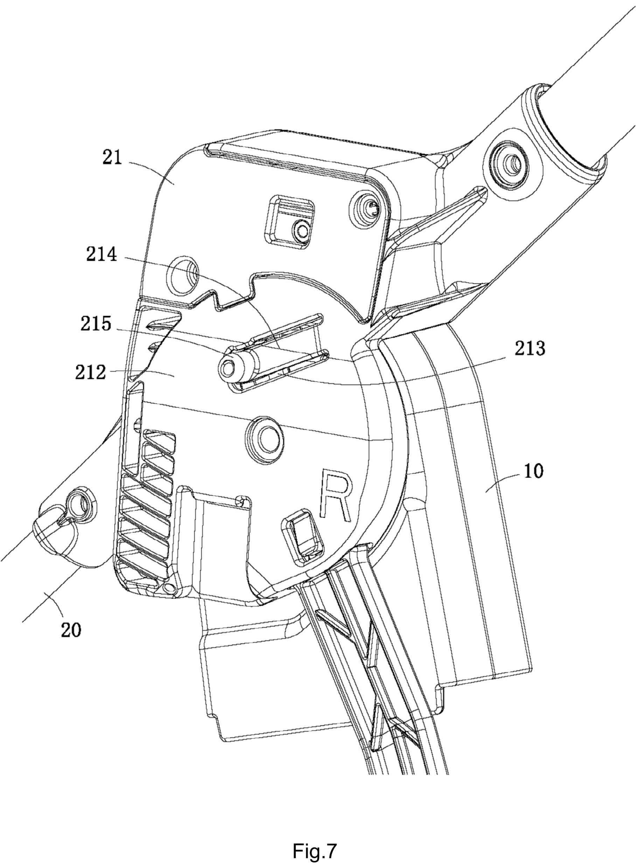

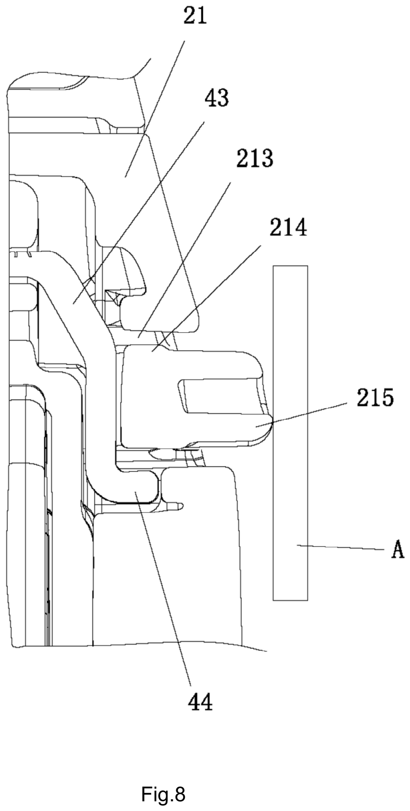

As shown in FIG. 4, the locking member 40 further includes an extension portion 43 and a blocking portion 44, the extension portion 43 is extended at one end of the engagement portion 42 away from the actuation portion 41, and the extension portion 43 and the actuation portion 41 are extended in opposite directions. The blocking portion 44 is formed at one end of the extension portion 43 away from the engagement portion 42 and in a shape of a hook. As shown in FIG. 7, the rotary holder 21 is provided with an opening 213 on a side wall 212, and the rotary holder 21 has an elastic arm 214 extending from the side wall 212 in the opening 213. The elastic arm 214 has a convex portion 215 at a tail end thereof. The convex portion 215 laterally protrudes relative to the side wall 212. When the locking member 40 is at the lock position P3 and is engaged and locked with one of the seat mode positioning portion 11 and the carrycot mode positioning portion 12, the opening 213 is aligned with the position of the extension portion 43, and the convex portion 215 is pressed, so that the elastic arm 214 leans from the opening 213 towards the extension portion 43 and blocks the blocking portion 44 to restrict the locking member 40 from detaching from the lock position P3. For example, in the seat mode (as shown in FIG. 1), a vehicle seat (not shown in the figure) may be fixed to the bearing support 20. The vehicle seat presses against the convex portion 215 corresponding to a side wall surface A at a position where the convex portion 215 (as shown in FIG. 8) is located, and in this case, the elastic arm 214 blocks the blocking portion 44, and the bearing support 20 is locked at the seat position P1. A this time, after the vehicle seat is stuck in the bearing support 20, detachment of the blocking portion 44 from the lock position P3 can be prevented, so that the vehicle seat cannot be adjusted from the seat position P1 to the carrycot position P2 after being stuck. In this way, back flip of the vehicle seat caused by an incorrect use angle can be prevented, so as to ensure the safety of the vehicle seat in terms of the use. That is, the vehicle seat can be engaged only at the seat position P1.

As shown in FIG. 3, each of the fixing holders 10 has a first side surface 13, and each of the rotary holders 21 has a second side surface 216. The first side surface 13 is opposite to the second side surface 216 when each of the rotary holders 21 is pivotably disposed on its corresponding fixing holder 10. As shown in FIG. 3 and FIG. 9, each of the fixing holders 10 has two convex limiting portions 14 on the first side surface 13, and each of the rotary holders 21 has concave groove portions 217 corresponding to the limiting portions 14 on the second side surface 216. The groove portion 217 is arc-shaped and has a predetermined arc length. The limiting portion 14 takes the predetermined arc length as a movable stroke in the groove portion 217 and thereby limits a rotatable angle of the rotary holder 21 The angle is in a range of 30 degrees to 45 degrees in this embodiment, preferably 42.5 degrees, but the present disclosure is not limited to the angle.

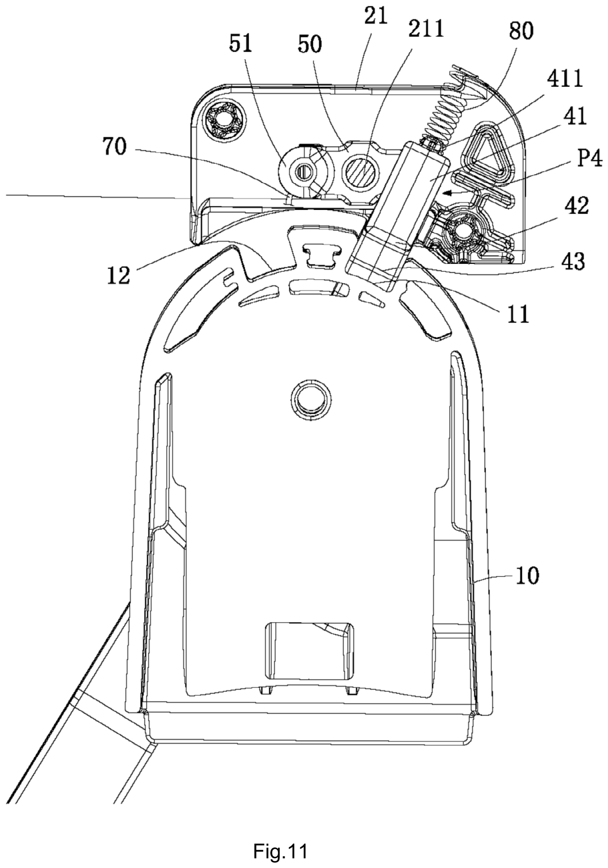

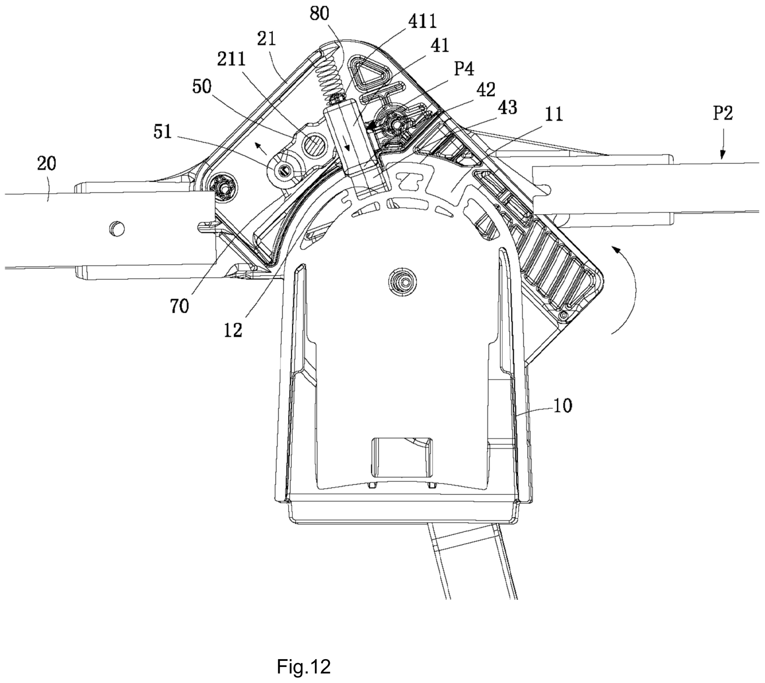

In an actual operation, if the bearing support 20 has been at the seat position P1 on the main frame body 200 and is in the seat mode (as shown in FIG. 1), if the bearing support 20 is to be switched to the carrycot position P2, a user may pull the operating member 60 to interlink, through the traction member 70, with the driving lever 50 to drive the locking member 40 to move from the lock position P3 to the unlock position P4 (as shown in FIG. 10 and FIG. 11), so that the locking member 40 can be disengaged from the seat mode positioning portion 11, and the bearing support 20 can pivotably swing to the carrycot position P2 (as shown in FIG. 12) and thus be in the carrycot mode. In this case, the pull on the operating member 60 is released, the locking member 40 is reset to the lock position P3 by the reset elastic force of the reset member 80 and is engaged and locked with the carrycot mode positioning portion 12 (as shown in FIG. 13), the bearing support 20 is locked at the carrycot position P2, and the convex portion 215 is pressed to cause the elastic arm 214 to lean towards the extension portion 43 to block the blocking portion 44 (as shown in FIG. 8), so as to restrict the locking member 40 from detaching from the lock position P3. If the bearing support 20 is to be switched from the carrycot mode to the seat mode, a difference from the above operating manner only lies in that the bearing support 20 swings from the carrycot position P2 back to the seat position P1 after the locking member 40 is disengaged from the seat mode positioning portion 11, and the remaining operations are the same. Therefore, details are omitted herein.

From the above description, it is apparent to find the following characteristics of the present disclosure.
1. In the seat-bed dual-purpose support switching mechanism 100 for a bearing device according to the present disclosure, the locking member 40 is connected to the driving lever 50, and the locking member 40 can be driven to move between the lock position P3 and the unlock position P4 with less effort through a seesaw-like action of the driving lever 50. By means of the simple structure, switching and locking of the bearing support 20 between the seat mode and the carrycot mode can be obtained, so as to achieve a simple structure and labor-saving operations.
2. When the bearing device according to the present disclosure is engaged with a vehicle seat, the bearing support 20 can be engaged with the vehicle seat only when at the seat position P1, and when engaged with the vehicle seat, the bearing support can block the blocking portion 44 with the elastic arm 214, thereby restricting the locking member 40 from detaching from the lock position P3, so as to prevent back flip of the vehicle seat caused by an incorrect use angle and ensure the safety of the vehicle seat in terms of the use.
3. In the seat-bed dual-purpose support switching mechanism 100 for a bearing device according to the present disclosure, the switching assembly 30 is further provided with the operating member 60 on the bearing support 20 and is connected to the driving lever 50 through the traction member 70, so that the operating member 60 can be arranged at a position convenient for the user to operate (e.g., at the handrail 201 of the main frame body 200 as shown in FIG. 1 and FIG. 2), and the movement of the locking member 40 can be operated remotely, so as to achieve the convenience of the remote operating.

The disclosure further comprises the following aspects.
Aspect 1. A seat-bed dual-purpose support switching mechanism (100) for a bearing device, wherein: the bearing device includes a main frame body (200) , and the seat-bed dual-purpose support switching mechanism (100) comprises:
   two fixing holders (10) respectively fixed to opposite sides of the main frame body (200) , at least one of the fixing holders (10) having a seat mode positioning portion (11) and a carrycot mode positioning portion (12) being separated by an angle on the fixing holder (10) ;
   a bearing support (20) provided, on opposite sides, with rotary holders (21) corresponding to each of the fixing holders (10) , each of the rotary holders (21) being rotatably arranged on its corresponding fixing holder (10) , and the bearing support (20) being configured to pivotably swing between a seat position (P1) and a carrycot position (P2) as the rotary holders (21) rotate; and
   a switching assembly (30) having a locking member (40) connected to a driving lever (50) to be disposed on at least one of the rotary holders (21),
   wherein, when the driving lever (50) is pulled by an external force, the locking member (40) is driven to move away from its corresponding fixing holder (10), so that the bearing support (20) is unlocked and allowed to pivotably swing between the seat position (P1) and the carrycot position (P2), and
   after the external force disappears, the locking member (40) is driven to move towards its corresponding fixing holder (10) to engage with one of the seat mode positioning portion (11) and the carrycot mode positioning portion (12), so that the bearing support (20) is locked.
Aspect 2. The seat-bed dual-purpose support switching mechanism (100) for the bearing device according to aspect 1, wherein the locking member (40) comprises an actuation portion (41) and an engagement portion (42) extending laterally from one end of the actuation portion (41),
   wherein each of the seat mode positioning portion(11) and the carrycot mode positioning portion(12)is a positioning groove, and the locking member (40) is engaged and locked when the engagement portion is inserted into one of the seat mode positioning portion (11) and the carrycot mode positioning portion (12) .
Aspect 3. The seat-bed dual-purpose support switching mechanism (100) for the bearing device according to aspect 2, wherein: the driving lever (50) has a force applying end (51) and a force resisting end (52) away from each other, as well as a shaft coupling portion (53) between the force applying end (51) and the force resisting end (52) and being shaft-coupled with the rotary holder (21) on which the driving lever (50) is disposed,
   wherein the switching assembly (30) comprises a traction member (70) connected to the force applying end (51) , and the force resisting end (52) is pivotably swingingly connected to the actuation portion (51) , so that the traction member (70) makes the driving lever (50) swing around an axis of the shaft coupling portion (53) , while the force resisting end (52) tows the actuation portion (41) to make the locking member (40) move.
Aspect 4. The seat-bed dual-purpose support switching mechanism (100) for the bearing device according to aspect 3, wherein: the switching assembly (30) comprises a reset member (80) extending along a moving direction of the locking member (40) to have one end abutting against one end of the actuation portion (41) away from the engagement portion (42) and the other end abutting against the rotary holder (21) , the actuation portion (41) applies a pressure to the reset member (80) to generate a reset elastic force when the driving lever (50) drives the locking member (40) to move until the bearing support (20) is unlocked, and the locking member (40) is reset by the reset elastic force to an extent that the bearing support (20) is locked when the driving lever (50) stops driving.
Aspect 5. The seat-bed dual-purpose support switching mechanism (100) for the bearing device according to aspect 4, wherein: the reset member (80) is a compression spring, and one end of the actuation portion (41) away from the engagement portion (42) is provided with a boss (411) for the reset member (80) to sleeve on.
Aspect 6. The seat-bed dual-purpose support switching mechanism (100) for the bearing device according to aspect 4, wherein: the actuation portion (41) is provided with a rod portion (412) extending from a same side with the engagement portion (42) , and the driving lever (50) is provided, at the force resisting end (52) , with a receiving hole (521) being inserted through by the rod portion (412) , so as to pivotably swingingly connect to the actuation portion (41) .
Aspect 7. The seat-bed dual-purpose support switching mechanism (100) for the bearing device according to aspect 3, wherein: the shaft coupling portion (53) is a shaft hole, the rotary holder (21) , on which the driving lever (50) is disposed, has a pivoting shaft (211) arranged correspondingly to the shaft coupling portion (53) , and the driving lever (50) is shaft-coupled with the rotary holder (21) through the shaft coupling portion (53) being inserted through by the pivoting shaft (211) .
Aspect 8. The seat-bed dual-purpose support switching mechanism (100) for the bearing device according to aspect 3, wherein: the switching assembly (30) comprises an operable operating member (60) arranged on the bearing support (20) , and the traction member (70) is a cable having one end connected to the force applying end (51) and the other end connected to the operating member (60) , to pull the operating member (60) to drive the force applying end (51) through the traction member (70) , and to interlink with the actuation portion (41) through the force resisting end (52) to make the locking member (40) move.
Aspect 9. The seat-bed dual-purpose support switching mechanism (100) for the bearing device according to aspect 8, wherein:
   the operating member (60) comprises a pull portion (61) and two sliders (62), the pull portion (61) being pivotably arranged on the bearing support (20) and having two guide rail portions (611) disposed to be tilted, the two sliders (62) being disposed in the bearing support (20) , each of the sliders (62) having a guide channel (621) to engage with a corresponding guide rail portion (611) and having a joint to connect with one end of the traction member (70) ,
   wherein the two sliders (62) get close to each other through being guided by the two guide rail portions (611) as the pull portion (61) is pulled, so as to interlink with the traction member (70) to drive the force applying end (51) .
Aspect 10. The seat-bed dual-purpose support switching mechanism (100) for the bearing device according to aspect 2, wherein:
   the locking member (40) further comprises an extension portion (43) and a blocking portion (44), the extension portion (43) being extended at one end of the engagement portion (42) away from the actuation portion (41), the extension portion (43) and the actuation portion (41) being extended in opposite directions, and the blocking portion (44) being formed at one end of the extension portion (43) away from the engagement portion (42) and in a shape of a hook;
   the rotary holder (21) is provided with an opening (213) on a side wall (212), and the rotary holder (21) has an elastic arm (214) extending from the side wall (212) in the opening (213) and having, at a tail end thereof, a convex portion (215) laterally protruding from the side wall (212) ; and
   when the locking member (40) is engaged and locked by one of the seat mode positioning portion (11) and the carrycot mode positioning portion (12), the opening (213) is aligned with the position of the extension portion (43), and the convex portion (215) is pressed, so that the elastic arm (214) leans from the opening (213) towards the extension portion (43) and blocks the blocking portion (44) to restrict the locking member (40) from detaching from the bearing support (20) .
Aspect 11. The seat-bed dual-purpose support switching mechanism (100) for the bearing device according to aspect 1, wherein each of the fixing holders (10) has a first side surface (13), and each of the rotary holders (21) has a second side surface (216), the first side surface (13) being opposite to the second side surface (216) when each of the rotary holders (21) is pivotably disposed on its corresponding fixing holder (10),
   wherein in the first side surface (13) and the second side surface (216), one has a convex limiting portion (14), and the other has a concave groove portion (217) corresponding to the limiting portion (14), the groove portion (217) being arc-shaped and having a predetermined arc length, wherein the limiting portion (14) takes the predetermined arc length as a movable stroke in the groove portion (217) and thereby limits a rotatable angle of the rotary holder (21) .
Aspect 12. The seat-bed dual-purpose support switching mechanism (100) for the bearing device according to aspect 11, wherein the angle is in a range of 30 degrees to 45 degrees.
Aspect 13. The seat-bed dual-purpose support switching mechanism (100) for the bearing device according to aspect 1, wherein the bearing support (20) is provided with a canopy frame (22) .
Aspect 14. The seat-bed dual-purpose support switching mechanism (100) for the bearing device according to aspect 1, wherein the rotary holders (21) on the opposite sides of the bearing support (20) are connected to an accessory (23) at the seat position (P1) .
Aspect 15. The seat-bed dual-purpose support switching mechanism (100) for the bearing device according to aspect 14, wherein the accessory (23) is a dinner plate or a handrail.
Aspect 16. A seat, comprising a bearing support (20), two fixing holders (10), and a switching assembly (23), wherein:
   at least one of the fixing holders (10) has a seat mode positioning portion (11) and a carrycot mode positioning portion (12) being separated by an angle on the fixing holder (10) ;
   the bearing support (20) is provided, on opposite sides, with rotary holders (21) corresponding to each of the fixing holders (10), the rotary holders (21) being rotatably arranged on its corresponding fixing holders (10), and the bearing support (20) being configured to pivotably swing between a seat position and a carrycot position as the rotary holders (21) rotate; and
   the switching assembly comprises a locking member (40) connected to a driving lever (50) to be disposed on at least one of the rotary holders (21),
   wherein, when the driving lever (50) is pulled by an external force, the locking member (40) is driven to move away from its corresponding fixing holder (10), so that the bearing support (20) is unlocked and allowed to pivotably swing between the seat position (P1) and the carrycot position (P2), and
   after the external force disappears, the locking member (40) is driven to move towards its corresponding fixing holder (10) to engage with one of the seat mode positioning portion (11) and the carrycot mode positioning portion (12), so that the bearing support (20) is locked.
Aspect 17. A bearing device, characterized in that the bearing device is provided with the seat according to aspect 16.

## Claims

1. A support switching mechanism (100) for a bearing device, wherein: the bearing device includes a main frame body (200) , and the support switching mechanism (100) comprises:
two fixing holders (10) respectively fixed to opposite sides of the main frame body (200) , at least one of the fixing holders (10) having a seat mode positioning portion (11) and a carrycot mode positioning portion (12) being separated by an angle on the fixing holder (10) ;
a bearing support (20) provided, on opposite sides, with rotary holders (21) corresponding to each of the fixing holders (10), each of the rotary holders (21) being rotatably arranged on its corresponding fixing holder (10), and the bearing support (20) being configured to pivotably swing between a seat position (P1) and a carrycot position (P2) as the rotary holders (21) rotate; and
a locking member (40) wherein the locking member (40) is configured to be driven to move towards its corresponding fixing holder (10) to engage with one of the seat mode positioning portion (11) and the carrycot mode positioning portion (12) and be at a lock position (P3), so that the bearing support (20) is locked;
wherein the locking member (40) comprises a blocking portion (44), and the rotary holder (21) has an elastic arm (214),
wherein when the locking member (40) is engaged and locked by one of the seat mode positioning portion (11) and the carrycot mode positioning portion (12), the elastic arm (214) blocks the blocking portion (44) to restrict the locking member (40) from detaching from the lock position (P3) .

2. The support switching mechanism (100) for the bearing device according to claim 1, wherein the rotary holder (21) is provided with an opening (213) on a side wall (212),
the elastic arm (214) extends from the side wall (212) in the opening (213) ;
the elastic arm (214) has a convex portion (215) at a tail end thereof, wherein the convex portion (215) laterally protrudes from the side wall (212) .

3. The support switching mechanism (100) for the bearing device according to claim 2, wherein when the locking member (40) is at the lock position (P3), the convex portion (215) is pressed so that the elastic arm (214) leans from the opening (213) towards the locking member (40), and blocks the blocking portion (44) to restrict the locking member (40) from detaching from the lock position (P3) ;
and optionally wherein when the bearing support (20) is at the seat position (P1), a vehicle seat is fixed to the bearing support (20), a side wall surface (A) of the vehicle seat presses against the convex portion (215), so that the elastic arm (214) blocks the blocking portion (44), and the bearing support (20) is locked at the seat position (P1) .

4. The support switching mechanism (100) for the bearing device according to any one of claims 1 to 3, further comprising a driving lever (50) connected to the locking member (40),
wherein when the driving lever (50) is pulled by an external force, the locking member (40) is driven to move away from its corresponding fixing holder (10), so that the bearing support (20) is unlocked and allowed to pivotably swing between the seat position (P1) and the carrycot position (P2) ;
and optionally wherein the locking member (40) is configured to move linearly between the lock position (P3) in which the locking member (40) is engaged and locked with one of the seat mode positioning portion (11) and the carrycot mode positioning portion (12) and an unlock position (P4) in which the locking member (40) is disengaged from the one of the seat mode positioning portion (11) and the carrycot mode positioning portion (12), through the driving of the driving lever (50) .

5. The support switching mechanism (100) for the bearing device according to claim 4, wherein the driving lever (50) comprises:
a force applying end (51) and a force resisting end (52) away from each other, wherein the force resisting end (52) is pivotably swingingly connected to the locking member (40) ; and
a shaft coupling portion (53) between the force applying end (51) and the force resisting end (52), and being shaft-coupled with the rotary holder (21) on which the driving lever (50) is disposed.

6. The support switching mechanism (100) for the bearing device according to claim 5, further comprising:
a traction member (70) ; and
an operable operating member (60),
wherein the traction member (70) has one end connected to the force applying end (51) and the other end connected to the operating member (60), to pull the operating member (60) to drive the force applying end (51) through the traction member (70), to makes the locking member (40) move.

7. The support switching mechanism (100) for the bearing device according to any one of claims 1 to 6, wherein the locking member (40) comprises an actuation portion (41) and an engagement portion (42) extending laterally from one end of the actuation portion (41) ;
wherein each of the seat mode positioning portion (11) and the carrycot mode positioning portion (12) is a positioning groove, and the locking member (40) is engaged and locked when the engagement portion (42) is inserted into one of the seat mode positioning portion (11) and the carrycot mode positioning portion (12) .

8. The support switching mechanism (100) for the bearing device according to any one of claims 1 to 4, wherein the locking member (40) comprises:
an actuation portion (41) ;
an engagement portion (42) extending laterally from one end of the actuation portion (41) ; and
an extension portion (43) extending at one end of the engagement portion (42) away from the actuation portion (41),
wherein the blocking portion (44) is formed at one end of the extension portion (43) away from the engagement portion (42) .

9. The support switching mechanism (100) for the bearing device according to claim 8, wherein the extension portion (43) and the actuation portion (41) are extended in opposite directions, and the blocking portion is in a shape of a hook.

10. The support switching mechanism (100) for the bearing device according to claim 8 or 9, further comprising a driving lever (50),
wherein the driving lever (50) has a force resisting end (52) pivotably swingingly connected to the actuation portion (41), and the force resisting end (52) is configured to tows the actuation portion (41) to make the locking member (40) move.

11. The support switching mechanism (100) for the bearing device according to any one of claims 1 to 10, further comprising a reset member (80) capable of generating a reset elastic force to reset the locking member (40) to the lock position (P3);
and optionally wherein the reset member (80) extends along a moving direction of the locking member (40) .

12. The support switching mechanism (100) for the bearing device according to any one of claims 1 to 12, wherein each of the fixing holders (10) has a first side surface (13), and each of the rotary holders (21) has a second side surface (216), the first side surface (13) being opposite to the second side surface (216) when each of the rotary holders (21) is pivotably disposed on its corresponding fixing holder (10),
wherein in the first side surface (13) and the second side surface (216), one has a limiting portion (14), and the other has a groove portion (217) corresponding to the limiting portion (14),
the groove portion (217) is arc-shaped and has a predetermined arc length;
the limiting portion (14) takes the predetermined arc length as a movable stroke in the groove portion (217) and thereby limits a rotatable angle of the rotary holder (21) .

13. The support switching mechanism (100) for the bearing device according to claim 12, wherein the angle is in the range of 30 degrees to 45 degrees, and preferably 42.5 degrees.

14. The support switching mechanism (100) for the bearing device according to claim 10, wherein the actuation portion (41) is provided with a rod portion (412) extending from a same side with the engagement portion (42), and the driving lever (50) is provided, at the force resisting end (52), with a receiving hole (521) being inserted through by the rod portion (412), so as to pivotably swingingly connect to the actuation portion (41) .

15. A bearing device, **characterized in that** the bearing device is provided with the support switching mechanism (100) according to any one claims 1 to 14.
